# FASCICULE DE BREVET EUROPEEN

(11) **EP 4 023 739 B1**
(45) Date de publication et mention de la délivrance du brevet: **17.05.2023**
(21) Numéro de dépôt: 22150081.2
(22) Date de dépôt: 03.01.2022
(51) Int. Cl.: C12C 1/125, C12C 1/18

(54) **DISPOSITIF DE GRILLAGE DE MATIERE ORGANIQUE POUR EXTRACTION DE COMPOSES VOLATILS**
VORRICHTUNG ZUM RÖSTEN VON ORGANISCHEM MATERIAL ZUR EXTRAKTION VON FLÜCHTIGEN VERBINDUNGEN
DEVICE FOR ROASTING ORGANIC MATERIAL FOR EXTRACTING VOLATILE COMPOUNDS

(30) Priorité: 04.01.2021 FR 2100041
(43) Date de publication de la demande: 06.07.2022
(73) Titulaire: Passion Malts, 51360 Beaumont sur Vesle (FR)
(72) Inventeur: JULIEN, Denis, 51360 BEAUMONT-SUR-VESLE (FR)
(74) Mandataire: Cabinet Netter

(56) Documents cités:
- WO-A1-2011/158395
- WO-A1-2020/204722
- FR-A1- 2 509 747

## Description

L'invention concerne la génération de composés volatils à partir de matière organique.

Dans le domaine du maltage, la demande se tourne vers des malts ayant des teneurs précises de certains composés volatils apportant un goût.

Ainsi pour la bière ou le whisky, le goût tourbé est apprécié qu'il soit fort ou léger, voire s'effaçant devant d'autres saveurs.

La présence dans le produit final de saveurs étrangères au malt peut être obtenue par apport au sein du malt.

Le malt est une céréale ayant subi un processus complexe de trempage, de germination et de tourraillage. Le tourraillage consiste à chauffer le grain germé ou malt vert à, une température mettant fin à la vie biologique du grain germé. Le tourraillage peut être vu comme une torréfaction.

La Demanderesse a constaté que l'apport de tels composés volatils porteurs de saveurs, notamment de gaïacol, était irrégulier et mal maîtrisé. FR2509747 divulgue un procédé de préparation d'un malt au goût de fumée, appelé "malt à whisky", consistant à chauffer de l'air, à 48°C pendant environ 4 heures comprenant une extraction des composés volatils aromatisants.

Selon un aspect de l'invention, le dispositif de grillage de matière organique pour extraction de composés volatils, notamment de gaïacol, en continu, comprend un réservoir de matière organique brute, un organe de préparation de matière organique disposé en aval du réservoir de matière organique brute, un réservoir de matière organique élaborée disposé en aval de l'organe de préparation de matière organique, un organe d'alimentation et de circulation de matière organique élaborée disposé en aval du réservoir de matière organique élaborée, un four disposé en aval de l'organe d'alimentation et de circulation de matière organique élaborée et comprenant une résistance électrique, un ventilateur d'alimentation du four en air, un organe d'aspersion d'eau dans le four, un capteur de température disposé dans le four, un organe de commande recevant des données du capteur de température et émettant des consignes vers la résistance électrique, le ventilateur d'alimentation et l'organe d'aspersion d'eau. Les paramètres de grillage de la matière organique sont maîtrisés. La composition des fumées peut faire l'objet d'un choix.

Dans un mode de réalisation, l'organe de préparation de matière organique comprend un broyeur et un humidificateur pourvu d'au moins une buse d'aspersion d'eau vers la matière organique. La tourbe peut être approvisionnée à faible teneur en eau puis humidifiée.

Dans un mode de réalisation, l'organe d'alimentation et de circulation de matière organique élaborée comprend un organe de gavage du transporteur de matière organique élaborée, et une trappe à ouverture commandée dirigée vers le four de manière que la trappe étant fermée, la matière organique élaborée retourne dans le réservoir de matière organique élaborée et la trappe étant ouverte, la matière organique élaborée aille dans le four. Le transporteur peut être élévateur.

Dans un mode de réalisation, le four comprend des parois latérales évasées vers le bas, préférablement recouvertes de matériau à faible rugosité, et une grille de sole. Le risque de colmatage est réduit.

Dans un mode de réalisation, le ventilateur d'alimentation du four en air injecte de l'air sous une grille de sole du four. La circulation de la matière organique est facilitée.

Dans un mode de réalisation, l'organe d'aspersion d'eau dans le four comprend au moins une buse d'aspersion disposée en partie supérieure du four et alimentée par une conduite d'eau munie d'une vanne commandée par l'organe de commande. La combustion est maîtrisée.

Dans un mode de réalisation, le capteur de température est disposé dans une partie supérieure du four. Une température trop élevée peut être diminuée rapidement tout en continuant la production de composés volatils.

Dans un mode de réalisation, l'organe de commande est configuré pour établir une priorité d'action entre la résistance électrique, le ventilateur d'alimentation et l'organe d'aspersion d'eau pour maintenir la température à une valeur souhaitée. Le pilotage de la production de composés volatils est multivariables et de haute qualité.

Dans un mode de réalisation, l'organe de préparation de matière organique est disposé sous le réservoir de matière organique brute, le réservoir de matière organique élaborée est disposé sous l'organe de préparation de matière organique, l'organe d'alimentation et de circulation de matière organique est élévatoire, le four est alimenté en matière organique élaborée par le haut par l'organe d'alimentation et de circulation, un organe de décendrage étant monté sous le four. Le nombre de transporteurs est réduit. La consommation d'énergie est diminuée.

Dans un mode de réalisation, le dispositif est dépourvu d'alimentation en carburant minéral. L'environnement est préservé.

Dans un procédé de génération de composés volatils à partir de matière organique, la matière organique est dépourvue d'addition de matière minérale.

Dans un procédé de génération de composés volatils à partir de matière organique, la matière organique comprend de la tourbe, notamment selon la norme NF M03-002 de Juillet 1995, à distinguer de la tourbe pour culture potagère.

D'autres caractéristiques et avantages de l'invention apparaîtront à l'examen de la description détaillée ci-après, et des dessins annexés, sur lesquels :

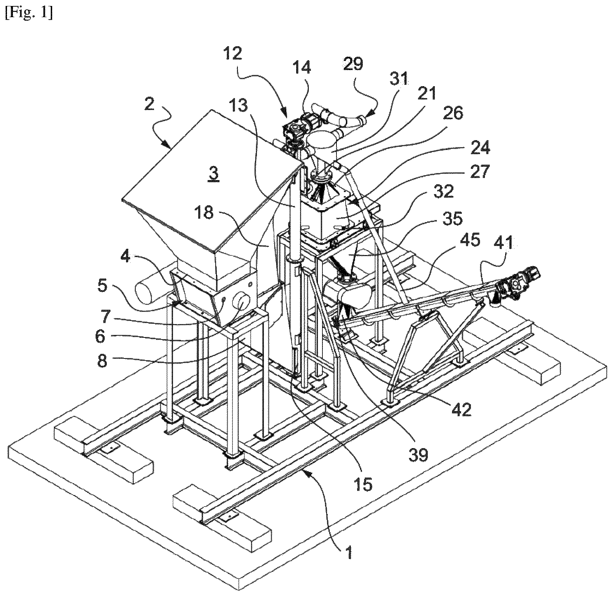

[fig.1] est une vue en perspective d'un dispositif de grillage de matière organique pour extraction de composés volatils selon un mode de réalisation.

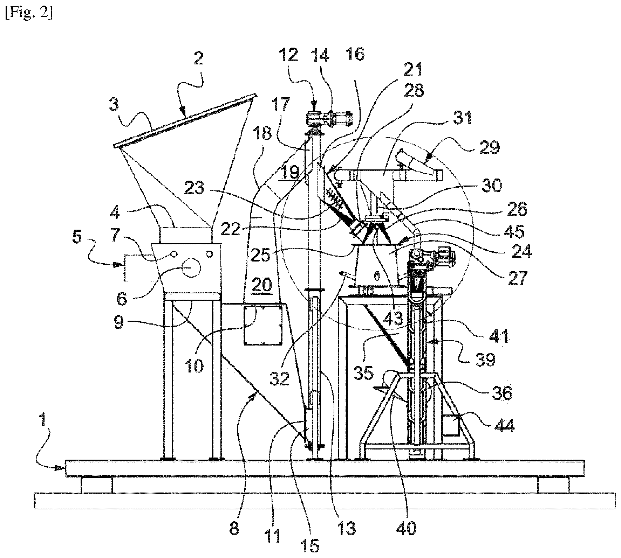

[fig.2] est une vue de côté dudit dispositif.

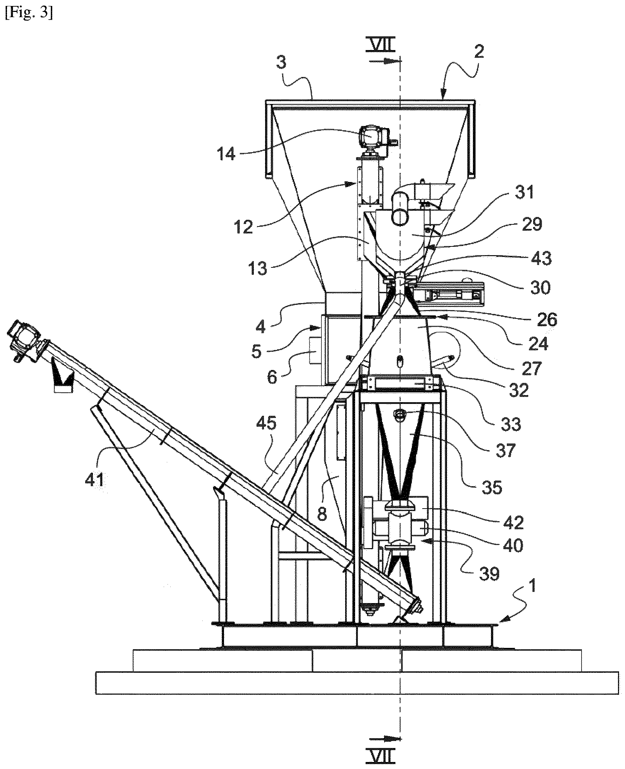

[fig.3] est une vue de face dudit dispositif.

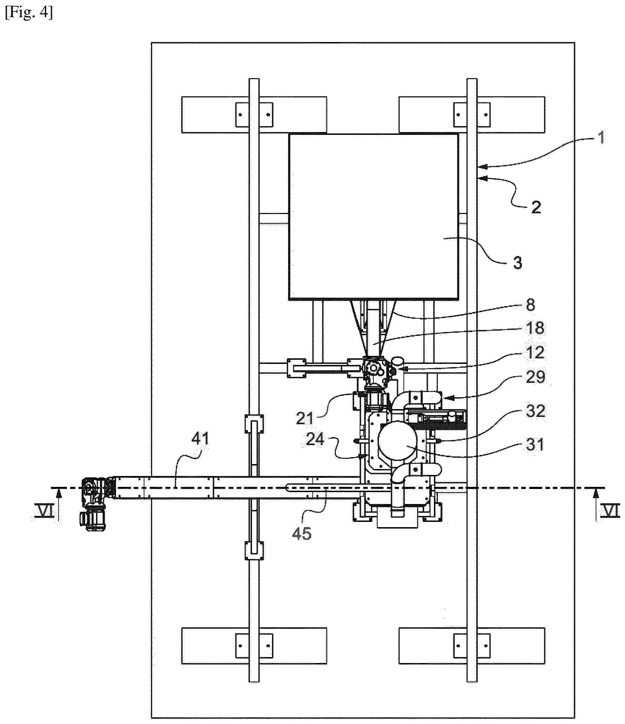

[fig.4] est une vue de dessus dudit dispositif.

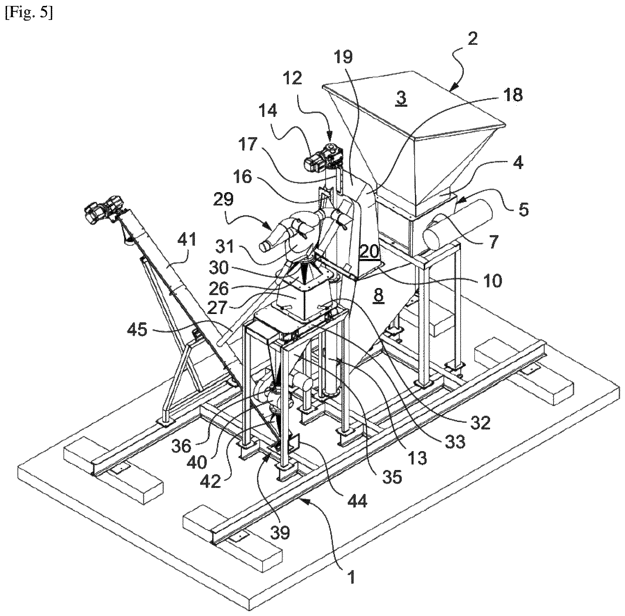

[fig.5] est une vue en perspective sous un autre angle dudit dispositif.

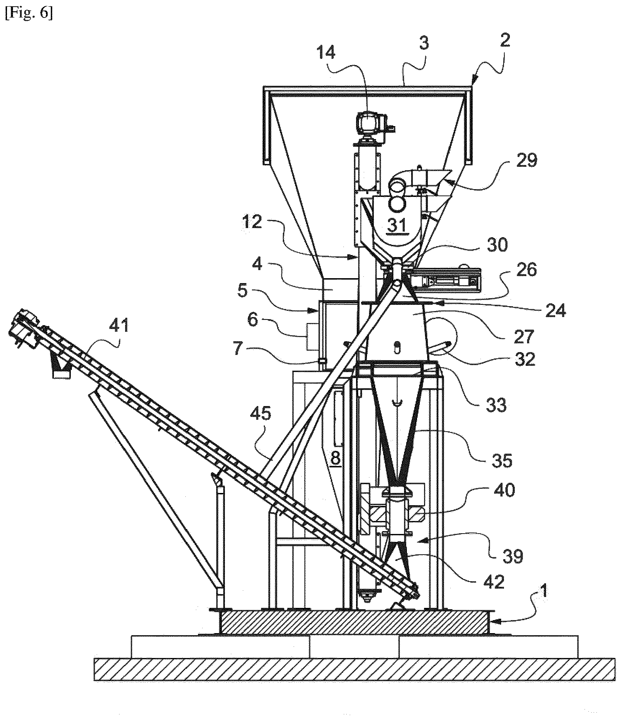

[fig.6] est une vue en coupe dudit dispositif.

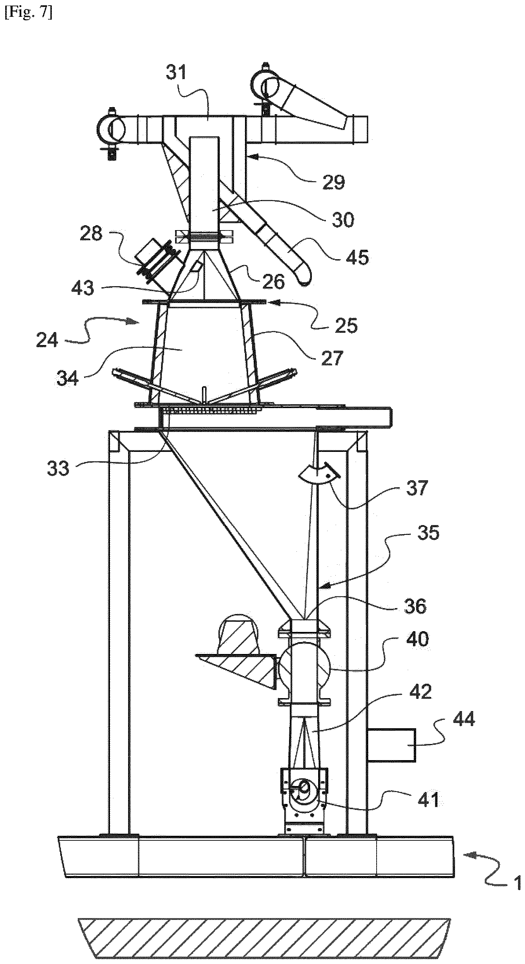

[fig.7] est une vue de détail en coupe dudit dispositif.

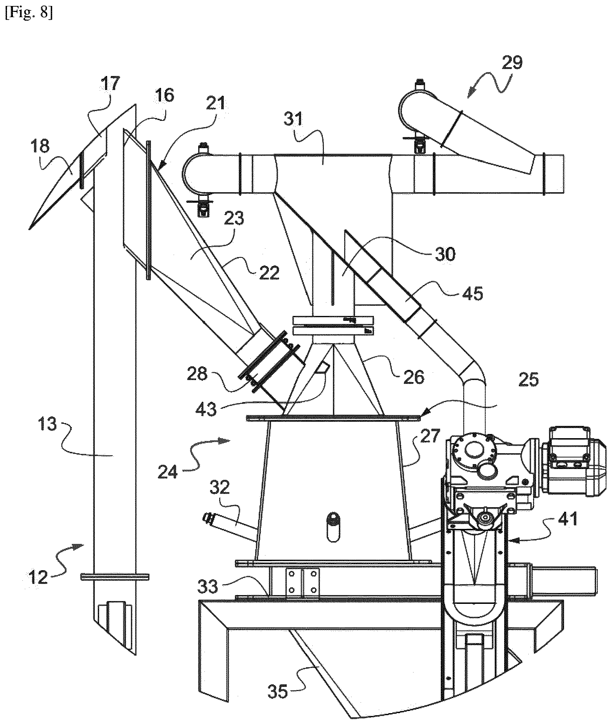

[fig.8] est une vue de détail en coupe dudit dispositif.

Les dessins annexés pourront non seulement servir à compléter l'invention, mais aussi contribuer à sa définition, le cas échéant.

Le gaïacol est un composé aromatique isomère du méthoxyphénol, comprenant un groupe hydroxyle et un groupe méthoxyle. On en trouve dans des goudrons de bois.

Le gaïacol peut être obtenu par combustion contrôlée de certaines tourbes. Toutefois, la tourbe étant un matériau hétérogène, la conduite de la combustion de la tourbe est difficile. Le taux de gaïacol dans les fumées obtenues par des vois conventionnelles est très variable ce qui rend lesdites fumées impropres à une utilisation dans le secteur alimentaire.

La Demanderesse a conçu et mis au point un dispositif de grillage propre à une production soutenue et régulière de composés volatils intéressants pour une utilisation alimentaire.

Comme illustré sur les figures, le dispositif de grillage de matière organique est prévu pour extraire des composés volatils, notamment du gaïacol, en continu. Le dispositif de grillage comprend un châssis 1 reposant sur le sol. Le châssis 1 supporte les autres pièces du dispositif de grillage. Le châssis 1 est mécanosoudé. Le châssis 1 peut présenter un encombrement permettant le transport par conteneur standard.

Le dispositif de grillage comprend un réservoir de matière organique brute 2. Le réservoir de matière organique brute 2 se présente sous la forme d'une trémie à ouverture supérieure 3 de grande taille et à ouverture inférieure 4 plus petite que l'ouverture supérieure. L'ouverture supérieure est rectangulaire et inclinée pour être chargée par un godet d'engin de manutention. L'ouverture inférieure est de section rectangulaire. L'ouverture inférieure est horizontale.

Le dispositif de grillage comprend un organe de préparation 5 de matière organique disposé en aval du réservoir de matière organique brute 2. L'organe de préparation 5 est disposé directement sous le réservoir de matière organique brute 2. L'organe de préparation 5 débouche vers le bas. L'organe de préparation 5 comprend un broyeur 6 à tourbe pour transformer de la tourbe en motte de granulométrie dispersée en tourbe en palets de granulométrie homogène. Le broyeur 6 peut comprendre des arbres dentés contrarotatifs. L'organe de préparation 5 comprend des buses d'aspersion d'eau 7 pour augmenter l'humidité de la tourbe et limiter la génération de fines. Les buses d'aspersion d'eau 7 sont montées en aval du broyeur 7. Les buses d'aspersion d'eau 7 sont montées sous le broyeur 6. Les buses d'aspersion d'eau 7 forment un humidificateur.

Le dispositif de grillage comprend un réservoir de matière organique élaborée 8 disposé en aval de l'organe de préparation 5 de matière organique. Le réservoir de matière organique élaborée 8 se présente sous la forme d'une trémie disposée sous l'organe de préparation 5 de matière organique, notamment sous les buses d'aspersion d'eau. La trémie est de section triangulaire en vue de côté avec une base supérieure sensiblement horizontale, un grand côté et un troisième côté formant un angle de plus de 90° avec la base supérieure.

Le réservoir de matière organique élaborée 8 comprend deux ouvertures supérieures 9, 10 ou entrées. Les ouvertures supérieures 9, 10 sont planes. Les ouvertures supérieures 9, 10 sont sensiblement dans le même plan. Les ouvertures supérieures 9, 10 sont distantes l'une de l'autre. Les ouvertures supérieures 9, 10 sont de section rectangulaire. La première des ouvertures supérieures est reliée à la sortie de l'organe de préparation 5. La première ouverture supérieure 9 reçoit la tourbe en palets. Le réservoir de matière organique élaborée 8 comprend une ouverture inférieure 11 ou sortie. L'ouverture inférieure 11 est située dans le bas du troisième côté. L'ouverture inférieure 11 est sensiblement verticale. L'ouverture inférieure 11 est à l'opposé du réservoir de matière organique brute 2 en projection sur un plan horizontal.

Ainsi, l'organe de préparation 5 de matière organique est disposé sous le réservoir de matière organique brute 2, et le réservoir de matière organique élaborée 8 est disposé sous l'organe de préparation 5 de matière organique. Le réservoir de matière organique élaborée 8 est disposé en aval du réservoir de matière organique élaborée 8.

Le dispositif de grillage comprend un organe d'alimentation et de circulation 12. L'organe d'alimentation et de circulation 12 comprend un élévateur 13 sensiblement vertical. L'organe d'alimentation et de circulation 12 peut comprendre une vis sans fin monté dans une conduite tubulaire. L'organe d'alimentation et de circulation 12 de matière organique est élévatoire. L'organe d'alimentation et de circulation 12 comprend un moteur électrique 14 monté en position sommitale. Le moteur électrique 14 entraîne l'élévateur 13. L'organe d'alimentation et de circulation 12 reprend la tourbe en palets sortant de la sortie du réservoir de matière organique élaborée 8. L'organe d'alimentation et de circulation 12 élève la tourbe en palets à une hauteur voisine du sommet du réservoir de matière organique brute 2. L'organe d'alimentation et de circulation 12 est munie d'une entrée 15 reliée à la sortie du réservoir de matière organique élaborée 8 et de deux sorties 16, 17. Les sorties 16, 17 sont formées par des ouvertures dans la conduite tubulaire. Les sorties 16, 17 sont sensiblement verticales.

La première des sorties est aval. La deuxième des sorties est située entre le moteur électrique et la première sortie. La deuxième sortie 17 est dirigée vers le réservoir de matière organique élaborée 8. Plus précisément, la deuxième sortie 17 de l'organe d'alimentation et de circulation 12 est reliée à la deuxième ouverture 10 du réservoir de matière organique élaborée 8. Une recirculation de la tourbe en palets est assurée. Entre l'organe d'alimentation et de circulation 12 et le réservoir de matière organique élaborée 8 est montée une conduite de recirculation 18. La conduite de recirculation 18 comprend une portion supérieure 19 inclinée pourvue d'une ouverture supérieure adaptée à la forme de la deuxième sortie 17 de l'élévateur 13, et une portion inférieure 20 sensiblement verticale pourvue d'une ouverture inférieure adaptée à la forme de la deuxième ouverture 10 supérieure du réservoir de matière organique élaborée 8. La portion inférieure 20 est de section croissante vers le bas. Le risque de colmatage est réduit.

En fonctionnement, la tourbe en palets est montée par l'organe d'alimentation et de circulation 12. La tourbe en palets sort par la première sortie 16 si l'aval l'admet. Sinon, la tourbe en palets monte jusqu'à la deuxième sortie 17, sort par la deuxième sortie 17, tombe dans la conduite de recirculation 18, et entre dans le réservoir de matière organique élaborée 8. La circulation de la tourbe en palets réduit le risque de prise en masse ou de colmatage.

Le dispositif de grillage comprend un organe de gavage 21. L'organe de gavage 21 comprend une conduite inclinée 22 et un vis rotative 23 montée dans la une conduite inclinée 22. La conduite inclinée 22 est de section décroissante vers le bas, soit vers l'aval. La conduite inclinée 22 comprend une extrémité supérieure reliée à la première sortie 16 de l'organe d'alimentation et de circulation 12. La conduite inclinée 22 comprend une extrémité inférieure aval. L'extrémité inférieure est annulaire. Ainsi, l'extrémité supérieure de grande section reçoit de la tourbe en palets de manière gravitaire en provenance de l'élévateur 13. Une interférence entre les pièces mobiles de l'élévateur 13 et les pièces mobiles de l'organe de gavage 21 est évitée. La vis rotative 23 entraîne la tourbe en palets vers le bas nonobstant la diminution de section. En cas d'arrêt de la vis rotative, la conduite inclinée 22 se remplit de tourbe en palets au moins en partie supérieure. La tourbe en palets montant dans l'élévateur 13 est ainsi empêchée d'entrer dans la conduite inclinée 22, poursuit son déplacement élévatoire et se déverse par la deuxième sortie 17 dans la conduite de recirculation 18. L'organe de gavage 21 peut présenter un fonctionnement intermittent sans qu'il soit nécessaire de prévoir une vitesse variable dudit organe de gavage 21.

L'organe de gavage 21 comprend, en extrémité aval de la conduite inclinée 22, une vanne commandée 28, par exemple une trappe guillotine. Lorsque la trappe est fermée, la matière organique élaborée retourne dans le réservoir de matière organique élaborée 8. Lorsque la trappe est ouverte, la matière organique élaborée pénètre dans le four décrit ci-après.

Le dispositif de grillage comprend un four 24. Le four 24 est disposé en aval de l'organe d'alimentation et de circulation 12 de matière organique élaborée. Le four 24 reçoit la tourbe en palets par le haut. Les cendres sont évacuées par le bas. Les fumées sont évacuées par le haut.

Le four 24 présente un corps 25 de section croissante vers le bas. Le corps 25 présente des parois intérieures en matériau à faible coefficient de frottement, notamment à faible rugosité. Le corps 25 comprend une partie supérieure 26 de forme pyramidale et une partie inférieure 27. La partie inférieure 27 est de section rectangulaire. Le four 24 comprend une entrée supérieure d'alimentation. L'entrée d'alimentation est reliée à la sortie de l'organe de gavage 21. L'entrée d'alimentation est de forme tubulaire. L'entrée d'alimentation débouche dans une paroi latérale de la partie supérieure 26 du corps 25. Le four 24 est alimenté en matière organique élaborée, par le haut par l'organe d'alimentation et de circulation 12.

Le four 24 comprend une évacuation de fumées 29. L'évacuation de fumées 29 comprend un tube 30 formant cheminée relié au sommet de la partie supérieure 26 du corps 25. L'évacuation de fumées 29 comprend un filtre 31 monté au-dessus dudit tube, soit en aval dans le sens d'écoulement des fumées. Le filtre 31 est muni d'une sortie de fumées dépoussiérées et d'une sortie de cendres dirigée vers le bas de façon que les cendres s'évacuent par gravité. Le filtre 31 peut être un cyclone. Les fumées dépoussiérées sont ensuite dirigées vers l'extérieur du dispositif en vue de leur utilisation comme support de composés aromatiques d'intérêt tel que le gaïacol.

Le four 24 comprend au moins une résistance électrique 32. Ici plusieurs résistances électriques sont prévues. Les résistances électriques 32 sont montées dans le bas de la partie inférieure 27 du four 24. Les résistances électriques 32 présentent une forme allongée de crayon. Le rapport longueur/diamètre des résistances électriques 32 est supérieur à 10. Les résistances électriques 32 sont fixées dans des trous traversant une paroi de la partie inférieure 27 du four 24. Les résistances électriques 32 sont dirigées vers le centre de la partie inférieure 27 du four 24.

Sous les résistances électriques 32, le four 24 comprend une grille de décendrage 33 formant sole. La grille de décendrage 33, la partie inférieure 27 et la partie supérieure 26 forment une chambre de combustion 34. La grille de décendrage 33 peut être monobloc ou en plusieurs sections. La grille de décendrage 33 peut être immobile ou présenter des parties mobiles. Les résistances électriques 32 sont commandées. Les résistances électriques 32 permettent de démarrer la combustion. Les résistances électriques 32 permettent d'accélérer la combustion et d'augmenter la température des fumées, en cas de besoin.

Le four 24 comprend une trémie inférieure 35. La trémie inférieure 35 est montée sous la grille de décendrage 33 et est ouverte sur la grille de décendrage 33. La trémie inférieure 35 présente une section triangulaire à sommet en bas selon au moins un plan de coupe, préférablement deux plans de coupe en intersection. La trémie inférieure 35 présente une ouverture inférieure 36 pour évacuer les cendres. La trémie inférieure 35 présente une ouverture d'alimentation en air 37 dans une paroi sensiblement verticale à distance de l'ouverture inférieure et au voisinage du bord supérieur de ladite paroi sensiblement verticale. L'ouverture d'alimentation en air 37 est distante de la grille de décendrage 33 en projection sur un plan horizontal. Dans la trémie inférieure 35, les cendres descendent tandis que l'air d'alimentation pénètre latéralement et remonte pour traverser la grille de décendrage 33. L'air d'alimentation est le comburant dans la chambre de combustion 34 tandis que la tourbe en palets est le carburant.

Le dispositif de grillage comprend un ventilateur 38 d'alimentation du four 24 en air. Le ventilateur 38 d'alimentation en air débouche dans ladite ouverture d'alimentation en air. Le ventilateur 38 d'alimentation en air est à vitesse variable. Le ventilateur 38 d'alimentation en air est commandé.

Le dispositif de grillage comprend un évacuateur 39 à cendres. L'évacuateur 39 à cendres est monté sous la trémie. L'évacuateur 39 à cendres est relié à l'ouverture inférieure de la trémie. L'évacuateur 39 à cendres est muni de buses d'aspersion d'eau pour refroidir les cendres et éteindre des braises subsistantes, en cas de besoin. L'évacuateur 39 à cendres comprend une écluse 40 à cendres pour une évacuation intermittente des cendres. L'évacuateur 39 à cendres comprend en aval de l'écluse 40 une conduite de transport 41. La conduite 41 peut être munie d'une vis rotative pour faire monter les cendres à une hauteur permettant leur chargement dans une benne. Les cendres peuvent ensuite être valorisées. La sortie de cendres du filtre 31 rejoint la conduite de transport 41 par un tube 45.

Le dispositif de grillage comprend un organe d'aspersion d'eau 42 dans le four 24. L'organe d'aspersion d'eau 42 peut comprendre des buses. Les buses peuvent être situées dans la partie supérieure 26 du four 24. Les buses sont alimentées par une conduite d'eau munie d'une vanne commandée. Ainsi, l'organe d'aspersion d'eau 42 est commandé. L'organe d'aspersion d'eau 42 permet de ralentir la combustion et de refroidir les fumées.

Le dispositif de grillage comprend un capteur de température 43 disposé dans le four 24. Le capteur de température 43 est disposé dans la partie supérieure 26 du four 24. Le capteur de température 43 peut être prévu pour mesurer la température des fumées. Le capteur de température 43 fournit un signal de température à l'extérieur du four 24. Le capteur de température 43 fournit un signal de température au dispositif de grillage.

Le dispositif de grillage comprend un organe de commande 44. L'organe de commande 44 reçoit des données du capteur de température. L'organe de commande 44 émet des consignes vers la résistance électrique 32, le ventilateur 38 d'alimentation et l'organe d'aspersion d'eau 42.

L'organe de commande 44 émet des consignes vers l'organe de préparation 5, notamment le broyeur 6 et les buses 7, l'organe d'alimentation et de circulation 12, l'organe de gavage 21, la vanne commandée 28 et l'évacuateur 39 à cendres. L'organe de commande 44 peut être distant. L'organe de commande 44 est équipé d'un logiciel de conduite de grillage de tourbe permettant de générer des fumées à température contrôlées avec précision. L'organe de commande 44 est configuré pour établir une priorité d'action entre la résistance électrique 32, le ventilateur d'alimentation 38 et l'organe d'aspersion d'eau 42 pour maintenir la température à une valeur souhaitée.

Dans un mode de réalisation, le dispositif est dépourvu d'alimentation en carburant minéral.

Le contrôle de la température des fumées permet de privilégier la production des composés aromatiques les plus recherchés, notamment le gaïacol.

## Revendications

1. Dispositif de grillage de matière organique pour extraction de composés volatils, notamment de gaïacol, en continu, comprenant un réservoir de matière organique brute, un organe de préparation (5) de matière organique disposé en aval du réservoir de matière organique brute, un réservoir de matière organique élaborée (8) disposé en aval de l'organe de préparation (5) de matière organique, un organe d'alimentation et de circulation (12) de matière organique élaborée disposé en aval du réservoir de matière organique élaborée (8), un four (24) disposé en aval de l'organe d'alimentation et de circulation (12) de matière organique élaborée et comprenant une résistance électrique (32), un ventilateur (38) d'alimentation du four (24) en air, un organe d'aspersion d'eau (42) dans le four (24), un capteur de température (43) disposé dans le four (24), un organe de commande (44) recevant des données du capteur de température (43) et émettant des consignes vers la résistance électrique (32), le ventilateur (38) d'alimentation et l'organe d'aspersion d'eau (42).

2. Dispositif selon la revendication 1, dans lequel l'organe de préparation (5) de matière organique comprend un broyeur (6) et un humidificateur pourvu d'au moins une buse d'aspersion d'eau (7) vers la matière organique.

3. Dispositif selon l'une des revendications précédentes, dans lequel l'organe d'alimentation et de circulation (12) de matière organique élaborée comprend un organe de gavage (21) du transporteur de matière organique élaborée, et une trappe à ouverture commandée dirigée vers le four de manière que la trappe étant fermée, la matière organique élaborée retourne dans le réservoir de matière organique élaborée (8) et la trappe étant ouverte, la matière organique élaborée aille dans le four (24).

4. Dispositif selon l'une des revendications précédentes, dans lequel le four (24) comprend des parois latérales évasées vers le bas, préférablement recouvertes de matériau à faible rugosité, et une grille de sole (33).

5. Dispositif selon l'une des revendications précédentes, dans lequel le ventilateur (38) d'alimentation du four en air injecte de l'air sous une grille de sole (33) du four (24).

6. Dispositif selon l'une des revendications précédentes, dans lequel l'organe d'aspersion d'eau (42) dans le four comprend au moins une buse d'aspersion disposée en partie supérieure (26) du four (24) et alimentée par une conduite d'eau munie d'une vanne commandée par l'organe de commande (44).

7. Dispositif selon l'une des revendications précédentes, dans lequel le capteur de température (43) est disposé dans une partie supérieure (26) du four (24).

8. Dispositif selon l'une des revendications précédentes, dans lequel l'organe de commande (44) est configuré pour établir une priorité d'action entre la résistance électrique, le ventilateur d'alimentation et l'organe d'aspersion d'eau pour maintenir la température à une valeur souhaitée.

9. Dispositif selon l'une des revendications précédentes, dans lequel l'organe de préparation (5) de matière organique est disposé sous le réservoir de matière organique brute (8), le réservoir de matière organique élaborée (8) est disposé sous l'organe de préparation (5) de matière organique, l'organe d'alimentation et de circulation (12) de matière organique est élévatoire, le four (24) est alimenté en matière organique élaborée par le haut par l'organe d'alimentation et de circulation (12), un organe de décendrage (39) étant monté sous le four (24).

10. Dispositif selon l'une des revendications précédentes, dépourvu d'alimentation en carburant minéral.

## Patentansprüche

1. Vorrichtung zum kontinuierlichen Rösten von organischem Material zur Extraktion von flüchtigen Verbindungen, insbesondere von Guajacol, umfassend einen Behälter für organisches Rohmaterial, ein Organ zur Aufbereitung (5) von organischem Material, das dem Behälter für organisches Rohmaterial nachgelagert angeordnet ist, einen Behälter für verarbeitetes organisches Material (8), der dem Organ zur Aufbereitung (5) von organischem Material nachgelagert angeordnet ist, ein Organ zur Versorgung und Zirkulation (12) von verarbeitetem organischem Material, das dem Behälter für verarbeitetes organisches Material (8) nachgelagert angeordnet ist, einen Ofen (24), der dem Organ zur Zufuhr und Zirkulation (12) von verarbeitetem organischem Material nachgelagert angeordnet ist und einen elektrischen Widerstand (32) umfasst, ein Gebläse (38) zur Versorgung des Ofens (24) mit Luft, ein Organ zum Versprühen von Wasser (42) in dem Ofen (24), einen Temperatursensor (43), der in dem Ofen (24) angeordnet ist, ein Steuerorgan (44), das Daten von dem Temperatursensor (43) empfängt und Anweisungen an den elektrischen Widerstand (32), das Versorgungsgebläse (38) und das Organ zum Versprühen von Wasser (42) ausgibt.

2. Vorrichtung nach Anspruch 1, wobei das Organ zur Aufbereitung (5) von organischem Material einen Zerkleinerer (6) und einen Befeuchter umfasst, der mit mindestens einer Düse zum Besprühen (7) des organischen Materials mit Wasser versehen ist.

3. Vorrichtung nach einem der vorhergehenden Ansprüche, wobei das Organ zur Versorgung und Zirkulation (12) von verarbeitetem organischem Material ein Füllorgan (21) für den Förderer des verarbeiteten organischen Materials und eine Klappe mit gesteuerter Öffnung umfasst, die in Richtung des Ofens gerichtet ist, so dass bei geschlossener Klappe das verarbeitete organische Material in den Behälter für verarbeitetes organisches Material (8) zurückkehrt und bei geöffneter Klappe das verarbeitete organische Material in den Ofen (24) gelangt.

4. Vorrichtung nach einem der vorhergehenden Ansprüche, wobei der Ofen (24) nach unten erweiterte Seitenwände, die vorzugsweise mit einem Material mit geringer Rauigkeit bedeckt sind, und einen Bodenrost (33) umfasst.

5. Vorrichtung nach einem der vorhergehenden Ansprüche, wobei das Gebläse (38) zur Versorgung des Ofens mit Luft unter ein Bodengitter (33) des Ofens (24) einbläst.

6. Vorrichtung nach einem der vorhergehenden Ansprüche, wobei das Organ zum Versprühen von Wasser (42) in dem Ofen mindestens eine Sprühdüse umfasst, die im oberen Teil (26) des Ofens (24) angeordnet ist und von einer Wasserleitung gespeist wird, die mit einem Ventil versehen ist, das durch das Steuerorgan (44) gesteuert wird.

7. Vorrichtung nach einem der vorhergehenden Ansprüche, wobei der Temperatursensor (43) in einem oberen Teil (26) des Ofens (24) angeordnet ist.

8. Vorrichtung nach einem der vorhergehenden Ansprüche, wobei das Steuerorgan (44) so konfiguriert ist, dass es eine Aktionspriorität zwischen dem elektrischen Widerstand, dem Versorgungsgebläse und dem Organ zum Besprühen mit Wasser herstellt, um die Temperatur auf einem gewünschten Wert zu halten.

9. Vorrichtung nach einem der vorhergehenden Ansprüche, wobei das Organ zur Aufbereitung (5) von organischem Material unter dem Behälter für organisches Rohmaterial (8) angeordnet ist, der Behälter für aufbereitetes organisches Material (8) unter dem Organ zur Aufbereitung (5) von organischem Material angeordnet ist, das Organ zur Versorgung und Zirkulation (12) von organischem Material elevatorisch ist, der Ofen (24) von oben durch das Organ zur Versorgung und Zirkulation (12) mit verarbeitetem organischem Material versorgt wird, wobei ein Entaschungsorgan (39) unter dem Ofen (24) angebracht ist.

10. Vorrichtung nach einem der vorhergehenden Ansprüche, die mit keiner Mineralölbrennstoff-Versorgung versehen ist.

## Claims

1. Device for roasting organic matter for extraction of volatile compounds, in particular guaiacol, continuously, comprising a tank of raw organic matter, a member (5) for preparing organic matter disposed downstream of the tank of raw organic matter, a tank (8) of prepared organic matter disposed downstream of the member (5) for preparing organic matter, a member (12) for supplying and circulating prepared organic matter disposed downstream of the tank (8) of prepared organic matter, a furnace (24) disposed downstream of the member (12) for supplying and circulating prepared organic matter and comprising an electric resistor (32), a fan (38) for supplying the furnace (24) with air, a member (42) for spraying water in the furnace (24), a temperature sensor (43) disposed in the furnace (24), a control member (44) receiving data from the temperature sensor (43) and emitting settings to the electric resistor (32), the supply fan (38) and the member (42) for spraying water.

2. Device according to claim 1, wherein the member (5) for preparing organic matter comprises a grinder (6) and a humidifier provided with at least one nozzle (7) for spraying water towards the organic matter.

3. Device according to one of the preceding claims, wherein the member (12) for supplying and circulating prepared organic matter comprises a member (21) for stuffing the transporter of prepared organic matter, and a door with controlled opening directed towards the furnace so that when the door is closed, the prepared organic matter returns into the tank (8) of prepared organic matter and when the door is open, the prepared organic matter goes into the furnace (24).

4. Device according to one of the preceding claims, wherein the furnace (24) comprises lateral walls flared downward, preferably covered with material having a low roughness, and a floor grate (33).

5. Device according to one of the preceding claims, wherein the fan (38) for supplying the furnace with air injects air under a floor grate (33) of the furnace (24).

6. Device according to one of the preceding claims, wherein the member (42) for spraying water into the furnace comprises at least one spray nozzle disposed in the upper part (26) of the furnace (24) and supplied by a water pipe provided with a valve controlled by the control member (44).

7. Device according to one of the preceding claims, wherein the temperature sensor (43) is disposed in an upper part (26) of the furnace (24).

8. Device according to one of the preceding claims, wherein the control member (44) is configured to establish a priority of action between the electric resistor, the supply fan and the member for spraying water to maintain the temperature at a desired value.

9. Device according to one of the preceding claims, wherein the member (5) for preparing organic matter is disposed under the tank (8) of raw organic matter, the tank (8) of prepared organic matter is disposed under the member (5) for preparing organic matter, the member (12) for supplying and circulating organic matter is a lifting one, the furnace (24) is supplied with prepared organic matter via the top by the supply and circulation member (12), a deashing member (39) being mounted under the furnace (24).

10. Device according to one of the preceding claims, not having a supply of mineral fuel.
